# EUROPEAN PATENT APPLICATION

(11) **EP 0 534 697 A1**
(43) Date of publication of application: **31.03.1993**
(21) Application number: 92308570.8
(22) Date of filing: 21.09.1992
(51) Int. Cl.: H02G 9/02, H02G 3/04

(54) **Cable trunking**

(30) Priority: 21.09.1991 GB 9120194
(71) Applicant: TRANSMISSION AND LIGHTING LIMITED, Hereford, HR4 9UR (GB)
(72) Inventor: Speak, Peter Winston, Eaton Bishop, Hereford, HR2 9QJ (GB); Mew, Raymond, Amlwch, Anglesey, LL68 9NB (GB)
(74) Representative: Russell, Paul Sidney

(57) **Abstract**

Cable trunking for roadsides, protecting communications and/or power cables, comprises sections of enclosed duct laid end-to-end. Each section comprises an open-topped duct body (10,12,14,16) and a lid (22,24,26,32,34) which is assemblable with the body after the introduction of cables through the top opening of the body. The body comprises a floor (10) and upstanding sidewalls (12,14), upper portions (18,20) of the sidewalls being convergent towards the top opening. The lid comprises laterally-spaced reinforcing bars (32,34) secured beneath a top plate (22), the bars providing for the lid to plug the top opening between uppermost portions (28,30) of the convergent sidewalls. The reinforcing bars (32,34) are secured by a single line of weld permitting them to roll inwardly across the underside of the top plate in an energy-absorbing function should the duct body sidewalls be forced inwards against them. Side flanges (24,26) of the lid are arranged to overlie the uppermost portions of the sidewalls externally. The duct sections are of a shatterproof construction, the body and the lid both being of steel.

## Description

This invention relates to cable trunking suitable for laying along a roadside to protect cables such as communications and power cables from damage by (inter alia) vehicles which accidentally leave the roadway, the trunking comprising sections of enclosed duct which can be laid end-to-end, each section comprising an open-topped duct body and a lid which is assemblable with the body after the introduction of cables through the top opening of the body.

Communications and power cables laid alongside motorways, for example, are vulnerable to damage from vehicles which leave the road in an accident or emergency. Damage to the cables is not only highly undesirable for the interruption to communications and/or power supplies which may occur, but also repair of the cables can be very expensive. In particular, co-axial cabling of a kind commonly used for communications is laid in substantial continuous lengths which cannot practically be repaired mid-length, which necessitates a complete length of the cable between terminations to be replaced at high cost.

For the protection of cables in such circumstances, pre-cast concrete trunking is commonly used which consists of sections of open-topped duct (set into the ground) and loose lids which fit over the duct to cover it. Whilst this affords some measure of protection, it is not at all uncommon for the concrete to shatter upon impact from a heavy vehicle and the concrete fragments to sever, or at least severely damage, the cabling.

It is an object of the present invention to provide improved trunking for such purposes, being better able to withstand heavy impacts and protect enclosed cabling from damage.

The invention is characterised in that each duct body comprises sidewalls which are convergent in an upwards direction towards the top opening of the body, the lid being arranged to plug the opening between uppermost portions of the sidewalls and comprising side flanges arranged to overlie said uppermost portions externally, the duct body and lid being of a shatterproof construction to withstand the impact of a vehicle without fragmentation in the course of ordinary usage.

The arrangement so provides for the uppermost portions of the sidewalls to be confined between the side flanges of the lid and portions of the lid which plug the opening between said uppermost portions. In the event of an impact there may, if suitably arranged, be a tendency for the lid to be pulled downwards relative to the duct body, so resulting in a trapping or pinching of said uppermost portions.

In a preferred construction, upper portions of both sidewalls are inclined similarly inwardly at an angle of from 20° to 30° to the vertical in the normal orientation of the duct body. However, the inclinations of the two sidewalls could be different from one another and one sidewall could be inclined and the other vertical; in any such non-symmetrical arrangement care would have to be taken that the trunking was laid the right way round in use.

To plug the top opening of the duct body, the lid may comprise laterally-spaced reinforcing bars secured to the underside of a top plate of the lid, the outside spacing of the bars being similar to the width of the top opening. The bars may be so secured that they can be displaced inwardly across the underside of the top plate (preferably without detachment from the plate) in an energy-absorbing function, should the adjacent duct body sidewalls be forced inwards against them.

Fastening means is preferably provided for securing the lid down to the duct body. This can give protection in use against unauthorised access to the cabling, and may also give a measure of extra strength to the duct section for protection of the cabling.

There now follows a detailed description, to be read with reference to the accompanying drawings, of cable trunking which illustrates the invention by way of example.

In the accompanying drawings:-
Figure 1 is a view from one end of a section of duct body;
Figure 2 is a similar view of a section of lid to fit on to the body;
Figure 3 is a further similar view showing the body and lid assembled together;
Figure 4 is a view in section through the lid showing fastening means for securing the lid to the duct body;
Figure 5 is a rough sketch showing the duct body in perspective and illustrating means utilised in coupling sections of duct body together end-to-end in constructing a length of trunking;
Figure 6 is a view illustrating use of an alternative form of fastening means for securing the lid to the body; and
Figure 7 is a view on Section VII-VII of Figure 6.

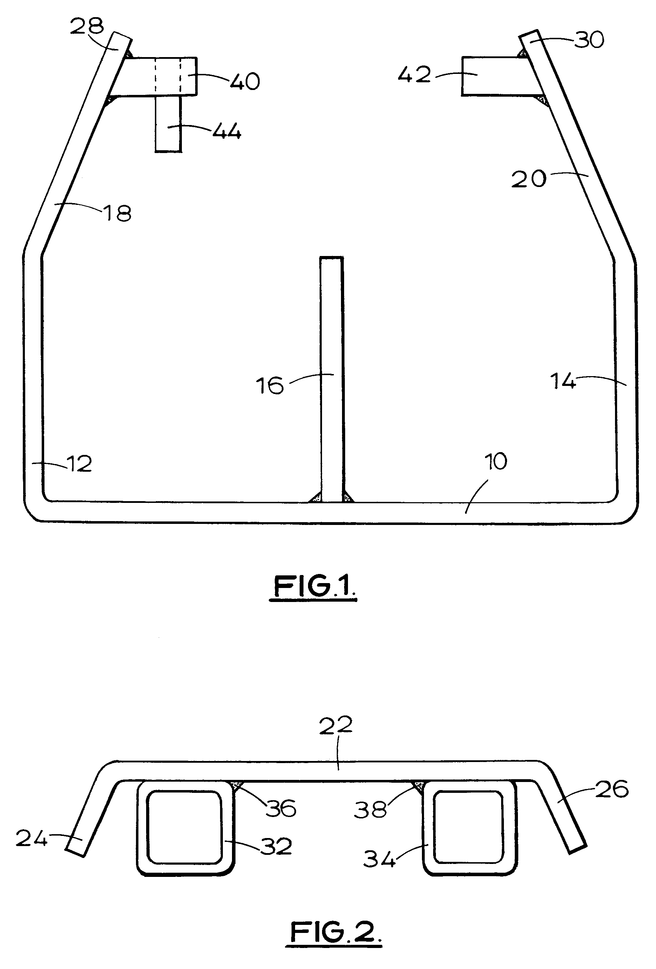

The section of duct body shown in Figures 1, 3 and 5 is fabricated of mild steel (hot dip galvanised) and comprises portions forming a flat (ordinarily horizontal) elongate floor 10 and sidewalls 12 and 14 upstanding vertically from opposite side edges of the floor. The duct is divided longitudinally, centrally between the sidewalls, by an upstanding plate 16 forming a partition which rises from the floor to approximately half the depth of the duct. From the level of the top of the partition, inclined upper portions 18 and 20 of the sidewalls are inturned equally from the vertical by an angle of around 20°to 30°.

The section of lid (Figures 2, 3 and 4) is also fabricated of steel and comprises portions forming a flat (ordinarily horizontal) top plate 22. Dependent side flanges 24 and 26 slope outwardly and downwardly from opposite side edges of the top plate 22 at an inclination to the vertical which matches that of the upper portions 18 and 20 of the duct sidewalls. The lid is so formed to fit on to the duct body to cover a top opening formed between uppermost portions 28 and 30 of the sidewalls, the lid embracing those uppermost portions and being located laterally on the body by its side flanges 24 and 26.

The lid is formed to plug the top opening of the body, comprising two longitudinally-extending reinforcing bars 32 and 34 fixed to the underside of the top plate 22. The bars are parallel to the side flanges 24 and 26, each being spaced inwards from an adjacent one of the flanges by a distance just sufficient to accommodate the uppermost portion 28 or 30 of the duct body sidewall. The bars are of square-section steel tube, having one side lying flat against the top plate 22, and are secured to the top plate by single seams of weld 36 and 38 along the opposing inner corners formed between the bars and the plate (i.e. only on the opposite side of the bar from the adjacent side flange).

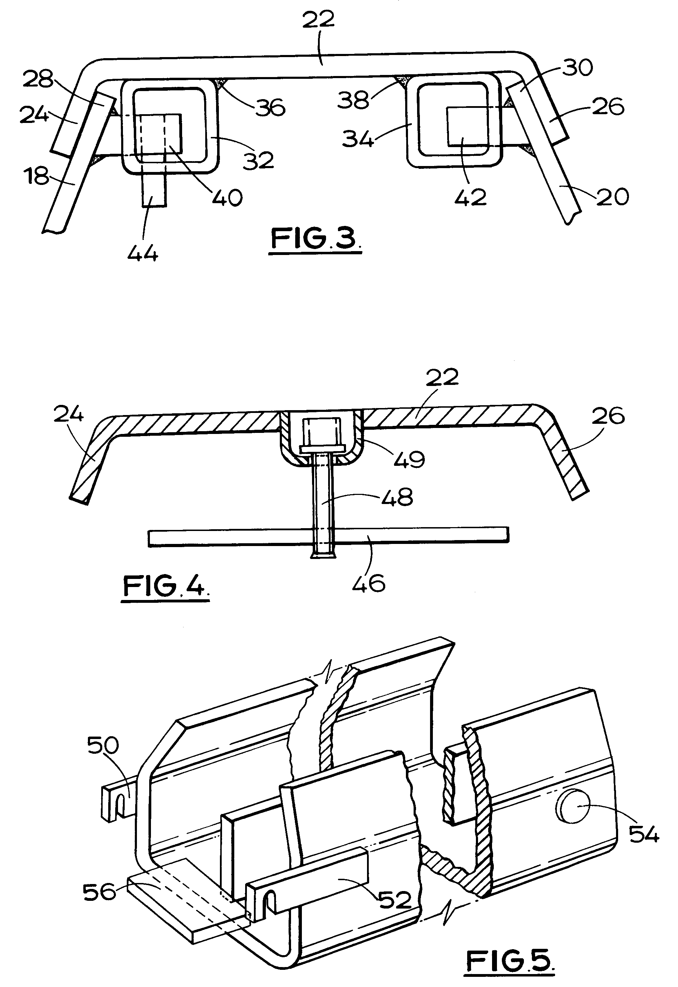

The lid and duct body are shown assembled in Figure 3 to form enclosed duct. Inwardly-projecting rectangular blocks 40 and 42 are welded to the sidewalls 12 and 14 just below the top opening of the duct to act as end stops for the lid, the blocks being abutted by end faces of the reinforcing bars 32 and 34. Such end stops may be positioned at any suitable intervals along the duct body to suit chosen lid lengths and positioning relative to the duct body.

The lid also comprises fastening means (Figure 4) for securing it down to the duct body. An elongate flat bar 46 is screw-threadedly mounted on a triangular-headed bolt 48 which depends downwards from a retaining cup 49 secured within an aperture in the lid. The bar is positioned to lie beneath the blocks 40 and 42 on the duct body when the lid is installed on the duct body, and by means of the bolt 48 can be drawn up tightly against flat undersides of the blocks. Free rotation of the bar during tightening is prevented by means of a lug 44 which projects downwards a suitable distance from a position adjacent to one of the blocks.

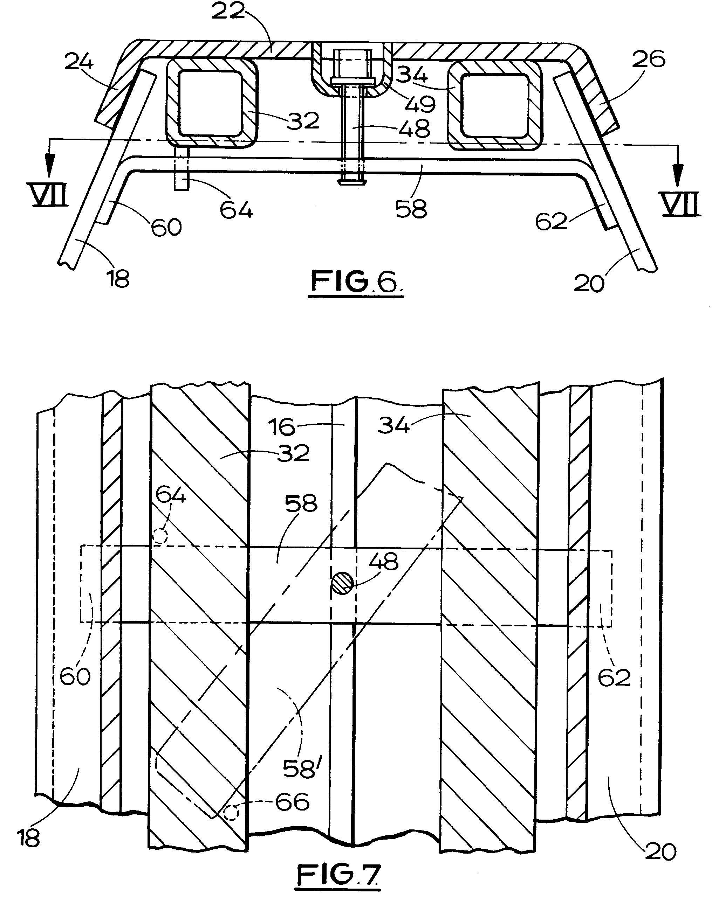

Continuous cable trunking along the sides of a major road such as a motorway can be provided by laying lengths (e.g. 2m lengths) of such duct bodies, with lids, end-to-end. The duct bodies would ordinarily be set in concrete to around half their depth to make them secure and to give them some protection. As shown in Figure 5, the sections of duct body can be coupled together by means of hooked arms 50 and 52 which project longitudinally from one end of the body and which are shaped to be hooked over headed studs 54 (one only shown) welded to the sidewalls at an opposite end of an adjacent body. A projecting threshold plate 56 may be welded to the floor 10 of the duct body at the same end as the arms, to overlap the floor joint with the adjacent body. The lids are preferably arranged also to overlap the joints.

The trunking is designed to give good protection to cabling laid on each side of the partition 16 within the duct body. In the event of a side impact from a heavy vehicle, the body and lid (being of a suitable steel ) will not fragment. Furthermore, the upwardly convergent upper portions 18 and 20 of the body sidewalls and the matching divergence downwards of the lid side flanges 24 and 26 will tend to encourage a vehicle to ride over the trunking. Any inwards deformation of the sidewalls that may occur will be resisted by engagement of the uppermost portions 28 or 30 of the side walls with the reinforcing bars 32 or 34 of the lid; the bars are arranged to roll inwards about their welded seams 36 and 38, in an energy-absorbing function. In the event of a complete collapse of a side wall, it would ultimately be arrested and restrained from crushing the cabling by engagement with the top of the partition plate 16.

Alternative fastening means for securing the lid down to the duct body is shown in Figures 6 and 7. The blocks 40 and 42 and the lug 44 on the duct body are omitted. The bolt 48 of the fastening means carries a clamping bar 58 which comprises downturned end portions 60 and 62 which are arranged to be drawn up tightly against inside faces of the upper portions 18 and 20 of the body sidewalls. Longitudinally-spaced pins 64 and 66 depend from one of the reinforcing bars 32 of the lid to prevent free rotation of the clamping bar in either direction; the pin 64 acts as a stop to position the bar during clamping, and the stop 66 is positioned to allow sufficient rotation of the bar in the unclamping direction to permit removal of the lid from the body when required.

## Claims

1. Cable trunking suitable for laying along a roadside to protect cables such as communications and power cables from damage by (inter alia) vehicles which accidentally leave the roadway, the trunking comprising sections of enclosed duct which can be laid end-to-end, each section comprising an open-topped duct body (Figure 1) and a lid (Figure 2) which is assemblable with the body after the introduction of cables through the top opening of the body, characterised in that each duct body comprises sidewalls (12,18,14,20) which are convergent in an upwards direction towards the top opening of the body, the lid being arranged to plug the opening between uppermost portions (28,30) of the sidewalls and comprising side flanges (24,26) arranged to overlie said uppermost portions externally, the duct body and lid being of a shatterproof construction to withstand the impact of a vehicle without fragmentation in the course of ordinary usage.

2. Cable trunking according to claim 1 in which an upper portion (18,20) of at least one of the sidewalls (12,14) of the duct body is inwardly inclined at an angle within the range of 20° to 30° to the vertical.

3. Cable trunking according to either of the preceding claims in which upper portions (18,20) of the two sidewalls (12,14) of the duct body are equally inclined inwards from the vertical.

4. Cable trunking according to any one of claims 1 to 3 in which the lid comprises laterally-spaced reinforcing bars (32,34) which are secured to the underside of a top plate (22) of the lid, the outside spacing of the bars being similar to the width of the top opening to provide for the lid to plug the opening.

5. Cable trunking according to claim 4 in which the reinforcing bars (32,34) are so secured to the top plate (22) that they may be displaced inwardly across the underside of the top plate in an energy-absorbing function should the adjacent duct body sidewalls (12,18,14,20) be forced inwards against them.

6. Cable trunking according to claim 5 in which the reinforcing bars (32,34) are secured to the top plate (22) in a manner permitting them to be displaced by rolling across the underside of the top plate without detachment from the plate.

7. Cable trunking according to claim 6 in which the bars are each secured by a single line of weld.

8. Cable trunking according to any one of claims 1 to 7 comprising releasable fastening means for securing the lid down to the duct body.

9. Cable trunking according to any one of claims 1 to 8 in which the duct body is divided longitudinally between the sidewalls by a partition (16) which stands up from a floor (10) of the body.

10. Cable trunking according to claim 9 in which the partition (16) rises from the floor to approximately half the depth of the duct body.

11. Cable trunking according to any one of claims 1 to 10 comprising coupling means (50,52,54) enabling the sections of enclosed duct to be coupled together end-to-end.
